# EUROPEAN PATENT SPECIFICATION

(11) **EP 2 751 407 B1**
(45) Date of publication and mention of the grant of the patent: **30.09.2015**
(21) Application number: 12755888.0
(22) Date of filing: 23.08.2012
(51) Int. Cl.: F01N 13/18

(54) **EXHAUST MODULE AND INTERNAL COMBUSTION ENGINE**
ABGASMODUL UND VERBRENNUNGSMASCHINE
MODULE ÉCHAPPEMENT ET MOTEUR À COMBUSTION INTERNE

(30) Priority: 30.08.2011 FI 20115845
(43) Date of publication of application: 09.07.2014
(73) Proprietor: Wärtsilä Finland Oy, 65380 Vaasa (FI)
(72) Inventor: DE SANCTIS, Alessandro, IT-34018 Trieste (IT); STRAIN, Euro, IT-34018 Trieste (IT); ZARATTINI, Giorgio, IT-34018 Trieste (IT); CONTENTO, Odorico, IT-34018 Trieste (IT)
(74) Representative: Berggren Oy Ab
(86) International application number: PCT/FI2012/050808
(87) International publication number: WO 2013/030445

(56) References cited:
- WO-A1-97/10420
- US-A1- 2004 163 611

## Description

### Technical field of the invention

The present invention relates to an exhaust module for a multi-cylinder internal combustion engine in accordance with the preamble of claim 1. The invention also concerns an internal combustion engine according to the preamble of the other independent claim.

### Background of the invention

The available space in the engine rooms of ships is often very limited, and therefore it is desirable to be able to fit the engines and the auxiliaries, such as turbochargers, in as small space as possible. In V-engines, such as in WO97010420, each bank of the engine is often provided with an own turbocharger, and positioning of the turbochargers may therefore be problematic. Complicated pipe structures from the by-pass and waste gate valves are needed, which increases the dimensions and costs of the exhaust system and decreases the reliability.

### Summary of the invention

An object of the present invention is to provide an improved exhaust module for a multi-cylinder internal combustion engine, where the cylinders are arranged in a V-configuration. The characterizing features of the exhaust module according to the invention are given in the characterizing part of claim 1. Another object of the invention is to provide an improved internal combustion engine, which comprises a plurality of cylinders that are arranged in a first bank and a second bank, a first exhaust manifold for receiving exhaust gases from the cylinders of the first bank, a second exhaust manifold for receiving exhaust gases from the cylinders of the second bank, a first turbocharger that is operated on the exhaust gases from the cylinders of the first bank of the engine, and a second turbocharger that is operated on the exhaust gases from the cylinders of the second bank of the engine. The engine is characterized by the characterizing part of the other independent claim.

An exhaust module according to the present invention comprises a first exhaust duct for connecting a first exhaust manifold of the engine to the turbine inlet of a first turbocharger, and a second exhaust duct for connecting a second exhaust manifold of the engine to the turbine inlet of a second turbocharger. The first exhaust duct crosses the second exhaust duct. The second exhaust duct is arranged to go below the first exhaust duct.

An internal combustion engine according to the present invention comprises an exhaust module defined above.

An exhaust module according to the invention allows axial positioning of two radial turbochargers, which helps to reduce the width of the engine assembly. The exhaust module is inexpensive to manufacture and easy to assemble.

According to an embodiment of the invention, the inlet of the second exhaust duct is at a lower level than the inlet of the first exhaust duct, and the outlet of the second exhaust duct is at a lower level than the outlet of the first exhaust duct. This allows partially overlapping positioning of the two exhaust ducts, which helps to make the exhaust module compact.

According to another embodiment of the invention, the outlet of the first exhaust duct is at an angle of 70-110 degrees in relation to the inlet of the first exhaust duct, and the outlet of the second exhaust duct is at an angle of 70-110 degrees in relation to the inlet of the second exhaust duct in the horizontal plane. When one of the exhaust ducts is arranged to go under the other exhaust duct and the exhaust ducts are bent approximately 90 degrees, turbochargers can be placed in a small space at the end of the engine.

According to another embodiment of the invention, the inlet of the first exhaust duct points to the same direction as the inlet of the second exhaust duct. The exhaust module can thus be placed at one end of the engine and receive exhaust gases directly from the exhaust manifolds.

According to another embodiment of the invention, the outlet of the first exhaust duct points to opposite direction compared to the outlet of the second exhaust duct. The turbochargers can thus be placed on opposite sides of the exhaust module.

According to another embodiment of the invention, the exhaust module comprises a waste gate duct, a first connecting duct that is arranged between the first exhaust duct and the waste gate duct, and a second connecting duct that is arranged between the second exhaust duct and the waste gate duct. According to another embodiment of the invention, the outlet of the waste gate duct points to the same direction as the inlet of the second exhaust duct. With a common waste gate duct for both the first and the second exhaust ducts, the number of pipes from the by-pass and waste gate valves can be reduced, which reduces costs and also improves the reliability of the system.

According to another embodiment of the invention, the waste gate duct is arranged below the first exhaust duct and the second exhaust duct.

According to another embodiment of the invention, the exhaust module is made from a one-piece casting.

According to an embodiment of the invention, the first exhaust manifold and the second exhaust manifold are arranged on top of the engine parallel with the longitudinal axis of the engine.

According to another embodiment of the invention, the turbochargers are radial turbochargers which are arranged at the end of the engine so that the shafts of the turbochargers are parallel with the longitudinal axis of the engine.

According to an embodiment of the invention, the first turbocharger of the engine is arranged on the second bank side of the engine, and the second turbocharger is arranged on the first bank side of the engine.

According to another embodiment of the invention, a by-pass duct from the intake system of the engine is connected to the waste gate outlet of the exhaust module.

### Brief description of the drawings

Fig. 1 shows an exhaust module according to an embodiment of the invention.
Fig. 2 shows the exhaust module of Fig. 1 from another angle.
Fig. 3 shows a cross-sectional view of the exhaust module.
Fig. 4 shows the exhaust module in connection with an engine block and other parts of an exhaust system.

### Detailed description of the invention

Embodiments of the invention are now described in more detail with reference to the accompanying drawings.

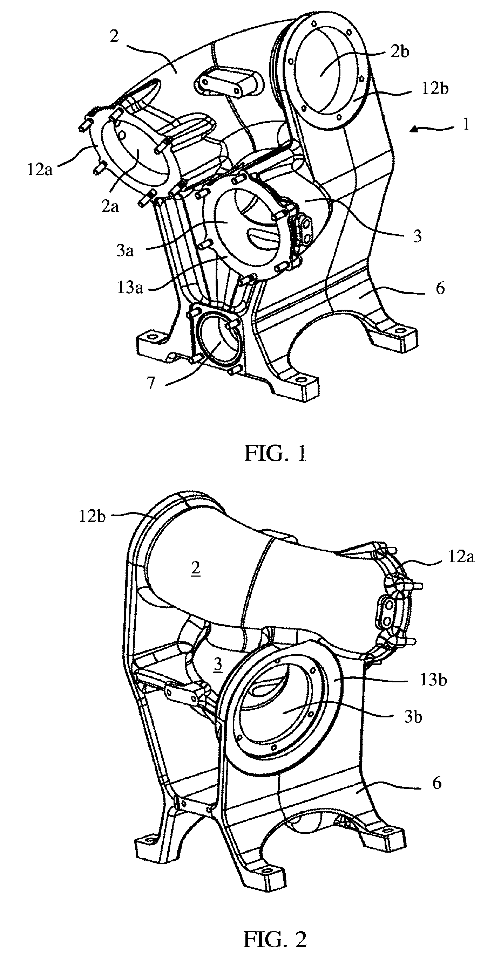

In figures 1-3 is shown an exhaust module 1 according to an embodiment of the invention. The exhaust module 1 is used in connection with the exhaust system of a large internal combustion engine, where the cylinders are arranged in a V-configuration. The engine can be, for instance, a main or an auxiliary engine of a ship, or an engine that is used for producing electricity at a power plant. The exhaust module 1 comprises two exhaust ducts 2, 3 that are integrated into the same module 1. The exhaust module 1 is made from a single-piece casting. The material of the exhaust module 1 can be for example cast iron. The first exhaust duct 2 is provided for connecting a first exhaust manifold of an engine to a first turbocharger. The second exhaust duct 3 is provided for connecting a second exhaust manifold of the engine to a second turbocharger. The first exhaust duct 2 crosses the second exhaust duct 3. The exhaust module 1 can be located at one end of the engine and fastened for example to a turbocharger bracket.

The first exhaust duct 2 of the exhaust module 1 can be arranged to receive exhaust gases from the first exhaust manifold through an inlet 2a. The inlet 2a can be connected to the first exhaust manifold either directly or via an intermediate duct. The inlet end of the first exhaust duct 2 is provided with an inlet flange 12a for connecting the first exhaust duct 2 to the upstream side of the exhaust system. The second exhaust duct 3 of the exhaust module 1 can be arranged to receive exhaust gases from the second exhaust manifold through an inlet 3a. Also the second exhaust duct 3 is provided with an inlet flange 13a. The inlet flange 13a can be used for connecting the second exhaust duct 3 directly to the second exhaust manifold or to an intermediate duct that is arranged between the second exhaust manifold and the second exhaust duct 3. The other end of the first exhaust duct 2 can be arranged to introduce the exhaust gases into the turbine of the first turbocharger via an outlet 2b. The outlet end is provided with an outlet flange 12b for connecting the first exhaust duct 2 to the first turbocharger. The other end of the second exhaust duct 3 can be arranged to introduce exhaust gases into the turbine of the second turbocharger via an outlet 3b. The outlet end is provided with an outlet flange 13b for connecting the second exhaust duct 3 to the second turbocharger. The outlet 2b of the first exhaust duct 2 is preferably at an angle of 70-110 degrees in relation to the inlet 2a of the first exhaust duct 2, and the outlet 3b of the second exhaust duct 3 is at an angle of 70-110 degrees in relation to the inlet 3a of the second exhaust duct 3 in the horizontal plane.

In addition to the first and the second exhaust ducts 2, 3, the exhaust module 1 comprises a bracket 6 for fastening the exhaust module 1 for example to a turbocharger bracket. The first and the second exhaust ducts 2, 3 are arranged above the bracket 6. The inlet ends of the exhaust ducts 2, 3 point to essentially the same direction. The inlet 2a of the first exhaust duct 2 is arranged farther from the bracket 6 in the vertical direction than the inlet 3a of the second exhaust duct 3. Also the outlet 2b of the first exhaust duct 2 is arranged farther from the bracket 6 in the vertical direction than the outlet 3b of the second exhaust duct 3. The inlets 2a, 2b of the first and the second exhaust ducts 2, 3 are arranged on the opposite sides of the longitudinal center line of the exhaust module 1. Longitudinal direction means here the direction in which exhaust gases are introduced into the exhaust module 1. Each of the exhaust ducts 2, 3 is bent towards the center line of the exhaust module 1 so that the outlet 2b, 3b points at approximately 90 degrees different direction than the inlet 2a, 3a. The outlet 2b of the first exhaust duct 2 points thus essentially to the opposite direction compared to the outlet 3b of the second exhaust duct 3. The second exhaust duct 3 is arranged to go under the first exhaust duct 2. Both the first and the second exhaust duct 2, 3 is arranged to cross the center line of the exhaust module 1. The outlets 2b, 3b of the first exhaust duct 2 and the second exhaust duct 3 are on the opposite sides of the center line of exhaust module 1 and point outwards from the center line. Since the first exhaust duct 2 and the second exhaust duct 3 are arranged partially one upon the other, the width of the exhaust module 1 is minimized. The space occupied by the exhaust module 1 is much smaller than the space that would be occupied by separate ducts.

The exhaust module 1 further comprises a waste gate duct 8. Through the waste gate duct 8, part of the exhaust gases can bypass the turbochargers when needed. The waste gate duct 8 is arranged below the first exhaust duct 2 and the second exhaust duct 3. The outlet 7 of the waste gate duct 8 points to essentially the same direction as the inlets 2a, 3a of the first and the second exhaust ducts 2, 3. A first connecting duct 9 is arranged between the first exhaust duct 2 and the waste gate duct 8, and a second connecting duct 10 is arranged between the second exhaust duct 3 and the waste gate duct 8. The waste gate duct 8 is thus common for the two exhaust ducts 2, 3, which reduces the required number of ducts in the exhaust system. A by-pass duct from the intake system of the engine can be connected to the outlet 7 of the waste gate duct 8. Through the by-pass duct, excess intake air can be introduced into the exhaust system to prevent compressor surge.

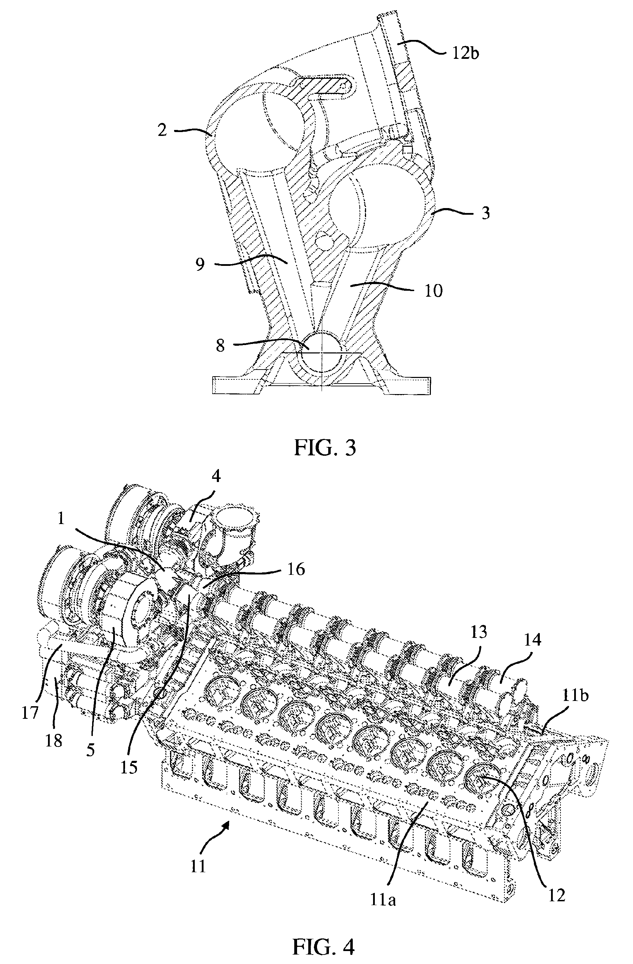

In figure 4, the exhaust module 1 is shown in connection with the engine block of a V-engine 11. The exhaust module 1 is attached to a turbocharger bracket 18. The engine 11 comprises a plurality of cylinders 12 that are arranged in a first bank 11a and a second bank 11b. A first exhaust manifold 13 is arranged to receive exhaust gases from the cylinders 12 of the first bank 11a, and a second exhaust manifold 14 is arranged to receive exhaust gases from the cylinders 12 of the second bank 11b of the engine 11. The first and the second exhaust manifolds 13, 14 are arranged on top of the engine 11 and they are parallel with the longitudinal axis of the engine 11. The exhaust manifolds 13, 14 are located between the banks 11a, 11b of the engine 11. The exhaust module 1 receives exhaust gases from the exhaust manifolds 13, 14. The inlets 2a, 3a of the exhaust module 1 face the outlets of the exhaust manifolds 13, 14. The exhaust module 1 is not directly connected to the exhaust manifolds 13, 14, but the engine 11 is provided with intermediate ducts 15, 16 that are arranged between the exhaust module 1 and the exhaust manifolds 13, 14. A first intermediate duct 15 connects the first exhaust duct 2 of the exhaust module 1 to the first exhaust manifold 13 of the engine 11, and a second intermediate duct 16 connects the second exhaust duct 3 to the second exhaust manifold 14. From the first exhaust duct 2, exhaust gases are guided into the turbine of a first turbocharger 4. From the second exhaust duct 3, exhaust gases are guided into the turbine of a second turbocharger 5. The turbochargers 4, 5 are radial turbochargers, of which shafts are parallel with the longitudinal axis of the engine 11, i.e. with the crankshaft direction. The turbochargers 4, 5 are located at the end of the engine 11 and fastened to the turbocharger bracket 18. The first turbocharger 4 is arranged on the side of the second bank 11b of the engine 11, and the second turbocharger 5 is arranged on the side of the first bank 11a of the engine 11. A by-pass duct 17 is connected between the intake system of the engine 11 and the waste gate outlet 7 of the exhaust module 1.

It will be appreciated by a person skilled in the art that the invention is not limited to the embodiments described above, but may vary within the scope of the appended claims.

## Claims

1. An exhaust module (1) for a multi-cylinder internal combustion engine (11), in which engine (11) the cylinders (12) are arranged in a V-configuration, the exhaust module (1) comprising
- a first exhaust duct (2) for connecting a first exhaust manifold (13) of the engine (11) to the turbine inlet of a first turbocharger (4), and
- a second exhaust duct (3) for connecting a second exhaust manifold (14) of the engine (11) to the turbine inlet of a second turbocharger (5),
**characterized in that** the first exhaust duct (2) crosses the second exhaust duct (3) and the second exhaust duct (3) is arranged to go below the first exhaust duct (2).

2. An exhaust module (1) according to claim 1, **characterized in that** the inlet (3a) of the second exhaust duct (3) is at a lower level than the inlet (2a) of the first exhaust duct (2), and the outlet (3b) of the second exhaust duct (3) is at a lower level than the outlet (2b) of the first exhaust duct (2).

3. An exhaust module (1) according to claim 1 or 2, **characterized in that** the outlet (2b) of the first exhaust duct (2) is at an angle of 70-110 degrees in relation to the inlet (2a) of the first exhaust duct (2), and the outlet (3b) of the second exhaust duct (3) is at an angle of 70-110 degrees in relation to the inlet (3 a) of the second exhaust duct (3) in the horizontal plane.

4. An exhaust module (1) according to any of the preceding claims, **characterized in that** the inlet (2a) of the first exhaust duct (2) points to the same direction as the inlet (3a) of the second exhaust duct (3).

5. An exhaust module (1) according to any of the preceding claims, **characterized in that** the outlet (2b) of the first exhaust duct (2) points to opposite direction compared to the outlet (3b) of the second exhaust duct (3).

6. An exhaust module (1) according to any of the preceding claims, **characterized in that** the exhaust module (1) comprises a waste gate duct (8), a first connecting duct (9) that is arranged between the first exhaust duct (2) and the waste gate duct (8), and a second connecting duct (10) that is arranged between the second exhaust duct (3) and the waste gate duct (8).

7. An exhaust module (1) according to claim 6, **characterized in that** the outlet (7) of the waste gate duct (8) points to the same direction as the inlet (3a) of the second exhaust duct (3).

8. An exhaust module (1) according to claim 6 or 7, **characterized in that** the waste gate duct (8) is arranged below the first exhaust duct (2) and the second exhaust duct (3).

9. An exhaust module (1) according to any of the preceding claims, **characterized in that** the exhaust module (1) is made from a one-piece casting.

10. An internal combustion engine (11) comprising
- a plurality of cylinders (12) that are arranged in a first bank (11a) and a second bank (11b),
- a first exhaust manifold (13) for receiving exhaust gases from the cylinders (12) of the first bank (11 a),
- a second exhaust manifold (14) for receiving exhaust gases from the cylinders (12) of the second bank (11b),
- a first turbocharger (4) that is operated on the exhaust gases from the cylinders (12) of the first bank (11a) of the engine (11), and
- a second turbocharger (5) that is operated on the exhaust gases from the cylinders (12) of the second bank (11b) of the engine (11),
**characterized in that** the engine (11) comprises an exhaust module (1) according to any of claims 1-9.

11. An internal combustion engine (11) according to claim 10, **characterized in that** the turbochargers (4, 5) are radial turbochargers which are arranged at the end of the engine (11) so that the shafts of the turbochargers (4, 5) are parallel with the longitudinal axis of the engine (11).

12. An internal combustion engine (11) according to claim 10 or 11, **characterized in that** the first turbocharger (4) is arranged on the second bank side of the engine (11), and the second turbocharger (5) is arranged on the first bank side of the engine (11).

13. An internal combustion engine (11) according to any of claims 10-12, **characterized in that** a by-pass duct (17) from the intake system of the engine (11) is connected to the waste gate outlet (7) of the exhaust module (1).

## Patentansprüche

1. Abgasmodul (1) für eine Mehrzylinder-Verbrennungskraftmaschine (11), wobei die Zylinder (12) in der Kraftmaschine (11) in einer V-Konfiguration angeordnet sind, wobei das Abgasmodul (1) Folgendes umfasst:
- eine erste Abgasleitung (2) zum Verbinden eines ersten Abgaskrümmers (13) der Kraftmaschine (11) mit dem Turbineneinlass eines ersten Turboladers (4) und
- eine zweite Abgasleitung (3) zum Verbinden eines zweiten Abgaskrümmers (14) der Kraftmaschine (11) mit dem Turbineneinlass eines zweiten Turboladers (5)
**dadurch gekennzeichnet, dass** die erste Abgasleitung (2) die zweite Abgasleitung (3) kreuz und die zweite Abgasleitung (3) dafür angeordnet ist, unterhalb der ersten Abgasleitung (2) zu verlaufen.

2. Abgasmodul (1) nach Anspruch 1, **dadurch gekennzeichnet, dass** sich der Einlass (3a) der zweite Abgasleitung (3) auf einem niedrigeren Niveau befindet als der Einlass (2a) der ersten Abgasleitung (2) und sich der Auslass (3b) der zweiten Abgasleitung (3) auf einem niedrigeren Niveau befindet als der Auslass (2b) der ersten Abgasleitung (2).

3. Abgasmodul (1) nach Anspruch 1 oder 2, **dadurch gekennzeichnet, dass** sich der Auslass (2b) der ersten Abgasleitung (2) in einem Winkel von 70 bis 110 Grad im Verhältnis zu dem Einlass (2a) der ersten Abgasleitung (2) befindet und sich der Auslass (3b) der zweiten Abgasleitung (3) in einem Winkel von 70 bis 110 Grad im Verhältnis zu dem Einlass (3a) der zweiten Abgasleitung (3) befindet.

4. Abgasmodul (1) nach einem der vorhergehenden Ansprüche, **dadurch gekennzeichnet, dass** der Einlass (2a) der ersten Abgasleitung (2) in die gleiche Richtung zeigt wie der Einlass (3a) der zweiten Abgasleitung (3).

5. Abgasmodul (1) nach einem der vorhergehenden Ansprüche, **dadurch gekennzeichnet, dass** der Auslass (2b) der ersten Abgasleitung (2) in eine entgegengesetzte Richtung, verglichen mit dem Auslass (3b) der zweiten Abgasleitung (3), zeigt.

6. Abgasmodul (1) nach einem der vorhergehenden Ansprüche, **dadurch gekennzeichnet, dass** das Abgasmodul (1) eine Ladedruckregelventil-Leitung (8), eine erste Verbindungsleitung (9), die zwischen der ersten Abgasleitung (2) und der Ladedruckregelventil-Leitung (8) angeordnet ist, und eine zweite Verbindungsleitung (10), die zwischen der zweiten Abgasleitung (3) und der Ladedruckregelventil-Leitung (8) angeordnet ist, umfasst.

7. Abgasmodul (1) nach Anspruch 6, **dadurch gekennzeichnet, dass** der Auslass (7) der Ladedruckregelventil-Leitung (8) zu der gleichen Richtung zeigt wie der Einlass (3a) der zweiten Abgasleitung (3).

8. Abgasmodul (1) nach Anspruch 6 oder 7, **dadurch gekennzeichnet, dass** die Ladedruckregelventil-Leitung (8) unterhalb der Abgasleitung (2) und der zweiten Abgasleitung (3) angeordnet ist.

9. Abgasmodul (1) nach einem der vorhergehenden Ansprüche, **dadurch gekennzeichnet, dass** das Abgasmodul (1) aus einem einteiligen Guss hergestellt ist.

10. Verbrennungskraftmaschine (11), die Folgendes umfasst:
- mehrere Zylinder (12), die in einer ersten Bank (11a) und einer zweiten Bank (11b) angeordnet sind
- einen ersten Abgaskrümmer (13) zum Aufnehmen von Abgasen aus den Zylindern (12) der ersten Bank (11a),
- einen zweiten Abgaskrümmer (14) zum Aufnehmen von Abgasen aus den Zylindern (12) der zweiten Bank (11b),
- einen ersten Turbolader (4), der mit den Abgasen aus den Zylindern (12) der ersten Bank (11a) der Kraftmaschine (11) betrieben wird, und
- einen zweiten Turbolader (5), der mit den Abgasen aus den Zylindern (12) der zweiten Bank (11b) der Kraftmaschine (11) betrieben wird,
**dadurch gekennzeichnet, dass** die Kraftmaschine (11) ein Abgasmodul (1) nach einem der Ansprüche 1 bis 9 umfasst.

11. Verbrennungskraftmaschine (11) nach Anspruch 10, **dadurch gekennzeichnet, dass** die Turbolader (4, 5) Radialturbolader sind, die an dem Ende der Kraftmaschine (11) angeordnet sind, so dass die Wellen der Turbolader (4, 5) parallel mit der Längsachse der Kraftmaschine (11) sind.

12. Verbrennungskraftmaschine (11) nach Anspruch 10 oder 11, **dadurch gekennzeichnet, dass** der erste Turbolader (4) auf der Seite der zweiten Bank der Kraftmaschine (11) angeordnet ist und der zweite Turbolader (5) auf der Seite der ersten Bank der Kraftmaschine (11) angeordnet ist.

13. Verbrennungskraftmaschine (11) nach einem der Ansprüche 10 bis 12, **dadurch gekennzeichnet, dass** eine Umgehungsleitung (17) von der Ansauganlage der Kraftmaschine (11) mit dem Ladedruckregelventil-Auslass (7) des Abgasmoduls (1) verbunden ist.

## Revendications

1. Module d'échappement (1) pour un moteur à combustion interne multicylindres (11), moteur (11) dans lequel les cylindres (12) sont disposés dans une configuration en "V", ledit module d'échappement (1) comprenant
- un premier conduit d'échappement (2) pour raccorder un premier collecteur d'échappement (13) du moteur (11) à l'entrée de turbine d'un premier turbocompresseur (4), et
- un deuxième conduit d'échappement (3) pour raccorder un deuxième collecteur d'échappement (14) du moteur (11) à l'entrée de turbine d'un deuxième turbocompresseur (5),
**caractérisé en ce que** le premier conduit d'échappement (2) croise le deuxième conduit d'échappement (3) et le deuxième conduit d'échappement (3) est agencé pour passer sous le premier conduit d'échappement (2).

2. Module d'échappement (1) selon la revendication 1, **caractérisé en ce que** l'entrée (3a) du deuxième conduit d'échappement (3) est à un niveau inférieur à l'entrée (2a) du premier conduit d'échappement (2) et la sortie (3b) du deuxième conduit d'échappement (3) est à un niveau inférieur à la sortie (2b) du premier conduit d'échappement (2).

3. Module d'échappement (1) selon la revendication 1 ou 2 **caractérisé en ce que** la sortie (2b) du premier conduit d'échappement (2) est à un angle de 70-110 degrés par rapport à l'entrée (2a) du premier conduit d'échappement (2) et la sortie (3b) du deuxième conduit d'échappement (3) est à un angle de 70-110 degrés par rapport à l'entrée (3a) du deuxième conduit d'échappement (3) dans le plan horizontal.

4. Module d'échappement (1) selon l'une quelconque des revendications précédentes **caractérisé en ce que** l'entrée (2a) du premier conduit d'échappement (2) pointe dans la même direction que l'entrée (3a) du deuxième conduit d'échappement (3).

5. Module d'échappement (1) selon l'une quelconque des revendications précédentes **caractérisé en ce que** la sortie (2b) du premier conduit d'échappement (2) pointe vers la direction opposée comparée à la sortie (3b) du deuxième conduit d'échappement (3).

6. Module d'échappement (1) selon l'une quelconque des revendications précédentes **caractérisé en ce que** le module d'échappement (1) comprend un conduit de soupape régulatrice (8), un premier conduit de raccord (9) qui est disposé entre le premier conduit d'échappement (2) et le conduit de soupape régulatrice (8) et un deuxième conduit de raccord (10) qui est disposé entre le deuxième conduit d'échappement (3) et le conduit de soupape régulatrice (8).

7. Module d'échappement (1) selon la revendication 6 **caractérisé en ce que** la sortie (7) du conduit de soupape régulatrice (8) pointe dans la même direction que l'entrée (3a) du deuxième conduit d'échappement (3).

8. Module d'échappement (1) selon la revendication 6 ou 7 **caractérisé en ce que** le conduit de soupape régulatrice (8) est disposé sous le premier conduit d'échappement (2) et le deuxième conduit d'échappement (3).

9. Module d'échappement (1) selon l'une quelconque des revendications précédentes **caractérisé en ce que** le module d'échappement (1) est fait d'un moulage en une seule pièce.

10. Moteur à combustion interne (11) comprenant
- une pluralité de cylindres (12) qui sont disposés dans une première ligne de cylindres (11a) et une deuxième ligne (11b),
- un premier collecteur d'échappement (13) pour recevoir les gaz d'échappement des cylindres (12) de la première ligne (11a),
- un deuxième collecteur d'échappement (14) pour recevoir les gaz d'échappement des cylindres (12) de la deuxième ligne (11b),
- un premier turbocompresseur (4) qui fonctionne sur les gaz d'échappement des cylindres (12) de la première ligne (11a) du moteur (11), et
- un deuxième turbocompresseur (5) qui fonctionne sur les gaz d'échappement des cylindres (12) de la deuxième ligne (11b) du moteur (11),
**caractérisé en ce que** le moteur (11) comprend un module d'échappement (1) selon l'une quelconque des revendications 1-9.

11. Moteur à combustion interne (11) selon la revendication 10 **caractérisé en ce que** les turbocompresseurs (4,5) sont des turbocompresseurs radiaux qui sont disposés à l'extrémité du moteur (11) de sorte que les arbres des turbocompresseurs (4,5) sont parallèles à l'axe longitudinal du moteur (11).

12. Moteur à combustion interne (11) selon la revendication 10 ou 11 **caractérisé en ce que** le premier turbocompresseur (4) est disposé sur le côté de la deuxième ligne du moteur (11) et le deuxième turbocompresseur (5) est disposé sur le côté de la première ligne du moteur (11).

13. Moteur à combustion interne (11) selon l'une quelconque des revendications 10-12 **caractérisé en ce qu'**un conduit de dérivation (17) venant du système d'admission du moteur (11) est raccordé à la sortie de la soupape régulatrice (7) du module d'échappement (1).
